# EUROPÄISCHE PATENTSCHRIFT

(11) **EP 2 461 100 B1**
(45) Veröffentlichungstag und Bekanntmachung des Hinweises auf die Patenterteilung: **03.01.2018**
(21) Anmeldenummer: 11009230.1
(22) Anmeldetag: 22.11.2011
(51) Int. Cl.: F23L 15/04, F24H 1/14, F24H 9/00, F24D 12/02, F24D 17/00, F28D 21/00

(54) **Heizgerät**
Heating device
Appareil de chauffage

(30) Priorität: 01.12.2010 AT 19952010
(43) Veröffentlichungstag der Anmeldung: 06.06.2012
(73) Patentinhaber: Vaillant GmbH, 42859 Remscheid (DE)
(72) Erfinder: Hertgers, Christiaan, 7218 MD Almen (NL)
(74) Vertreter: Hocker, Thomas

(56) Entgegenhaltungen:
- WO-A1-83/02493
- AT-B- 404 984
- DE-A1- 2 950 901
- DE-A1- 3 440 266

## Beschreibung

Die Erfindung bezieht sich auf ein Heizgerät mit Rekuperator.

Heizgeräte mit Rekuperatoren zur Wirkungsgradsteigerung sind aus dem Stand der Technik, z.B. aus DE 29 50 901 A1, bekannt. Dabei wird das Abgas eines Heizungsbrenners, das in einem ersten Wärmetauscher abgekühlt wurde, mittels kalten Brauchwassers weiter abgekühlt. Während mittels Heizungswasser das Abgas minimal auf Heizungsrücklauftemperatur abgekühlt werden kann, kann bei Brauchwasserkühlung das Abgas auf minimal die Temperatur des kalten Brauchwassers abgekühlt werden. Brauchwasser strömt mit einer Temperatur von etwa 10°C in Haushalte ein. Eine weitere Abkühlung ist nicht möglich. Strömt kein kaltes Brauchwasser zu, so erhitzt sich das stehende Brauchwasser und das Abgas kann nicht mehr so weit abgekühlt werden.

Der Erfindung liegt die Aufgabe zugrunde, den Wirkungsgrad eines Heizgerätes mit Rekuperator nochmals zu steigern.

Dies wird gemäß den Merkmalen des unabhängigen Anspruchs 1 gelöst. Vorteilhafte Ausgestaltungen der Erfindung ergeben sich durch die Merkmale der abhängigen Ansprüche.

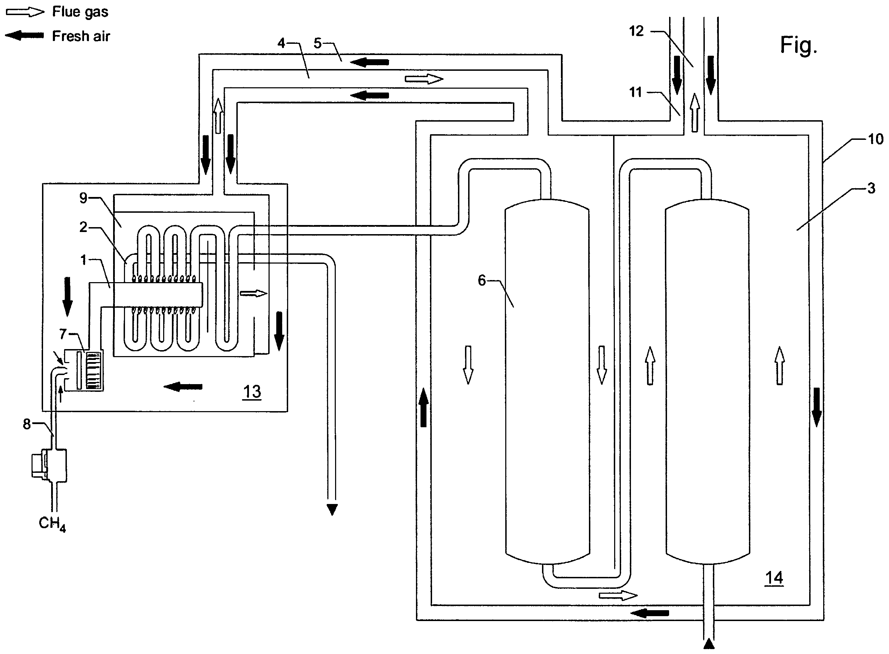

So kann der Rekuperator mit Unterdruckkammer neben oder oberhalb der Einheit aus Heizungsbrenner und erstem Wärmetauscher angeordnet sein. Ein Ausführungsbeispiel wird nun anhand der Figur 1 detailliert erläutert, wobei dieses Ausführungsbeispiel gemäß Figur 1 jedoch nicht unter den Wortlaut des Anspruchs 1 fällt. Figur 1 zeigt ein Heizgerät mit einem Heizungsbrenner 1, der von einem Gebläse 7 und einer Brenngaszufuhr 8 mit einem Brenngas-Luft-Gemisch gespeist wird. Die heißen Verbrennungsabgase des Heizungsbrenners 1 durchströmen die Brennkammer 9, in der sich ein Wärmetauscher 2 befindet. Diese genannten Komponenten 1, 2, 7, 8, 9 befinden sich in einer Heizgeräteunterdruckkammer 13. Die Komponente 8 kann auch außerhalb der Heizgeräteunterdruckkammer 13 angeordnet sein. Der Wärmetauscher 2 ist mit einer ersten Abgasleitung 4 zum Abführen der im ersten Wärmetauscher 2 abgekühlten Abgase des Heizungsbrenners 1 verbunden. Die Heizgeräteunterdruckkammer 13 ist mit einer ersten Frischluftleitung 5 zum Zuführen von Verbrennungsluft zum Gebläse 7 verbunden, wobei die erste Abgasleitung 4 und die Frischluftleitung 5 koaxial verlaufen.

Ein Rekuperator 3 verfügt über einen zweiteiligen Brauchwasserspeicher 6, welcher sich in einem von Abgas umspülten Gehäuse 14 befindet. Dieses Gehäuse 14 wiederum ist von einer Unterdruckkammer 10 umgeben. Aus dem Gehäuse 14 führt eine zweite Abgasleitung 12 in die Umgebung. Diese zweite Abgasleitung 12 ist von einer zweiten Frischluftleitung 11 umgeben.

Das Gehäuse 14 des Rekuperators 3 und die Unterdruckkammer 10 sind über die erste Abgasleitung 4 und die Frischluftleitung 5 mit dem ersten Wärmetauscher 2 und der Heizgeräteunterdruckkammer 13 verbunden. Der Brauchwasserspeicher 6 ist mit einer nicht dargestellten Brauchwasserzufuhr und dem ersten Wärmetauscher 2 verbunden.

Der Rekuperator 3 mit Unterdruckkammer 10 ist im dargestellten Fall neben der Heizgeräteunterdruckkammer 13 angeordnet; er kann jedoch auch darüber angeordnet sein.

Beim Heizungsbetrieb wird dem Heizungsbrenner 1 über das Gebläse 7 und die Brenngaszufuhr 8 einem Brenngas-Luft-Gemisch zugeführt und in der Brennkammer 9 entzündet. Die heißen Abgase durchströmen zunächst den ersten Wärmetauscher 2, in dem als zweites Medium Brauchwasser über den ersten Wärmetauscher 2 strömt. Im ersten Wärmetauscher 2 gibt das heiße Abgas thermische Energie an das Brauchwasser ab. Die abgekühlten Abgase strömen durch die Abgasleitung 4 in das Gehäuse 14 des Rekuperators 3, wo sie den zweiteiligen Brauchwasserspeicher 6 umströmen und dabei thermische Energie auf das im zweiteiligen Brauchwasserspeicher 6 befindliche Brauchwasser abgeben. Gleichzeitig strömt Brauchwasser in den zweiteiligen Brauchwasserspeicher 6 ein. Das in dem zweiteiligen Brauchwasserspeicher 6 des Rekuperators 3 vom Abgas erhitzte Brauchwasser strömt über den ersten Wärmetauscher 2, wo es von den heißen Abgasen des Heizungsbrenners 1 erhitzt wird.

Durch das Durchströmen des Gehäuses 14 mit heißen oder zumindest warmen Abgasen erhitzt sich dieses. Die das Gehäuse 14 umgebende Unterdruckkammer 10 nimmt diese Wärme auf. Dort wird die Wärme auf die Frischluft, die von der zweiten Frischluftleitung 11 über die Unterdruckkammer 10, die erste Frischluftleitung 5 und die Heizgeräteunterdruckkammer 13 zum Gebläse strömt, übertragen. Hierdurch werden die Abstrahlverluste minimiert.

Wie bei jedem Wärmetauscher gilt der Grundsatz, dass das wärmere Medium minimal auf eine Temperatur oberhalb der Temperatur des kälteren Mediums abgekühlt werden kann, wobei die maximale Wärmeübertragung bei einer Durchströmung im Gegenstromprinzip erreicht wird. Abgase üblicher erdgasbetriebener Heizungsbrenner 1 besitzen einen Wasserdampfanteil von etwa 105 Gramm Wasserdampf pro trockenes Kilogramm Abgas. Der Taupunkt des Abgases liegt bei etwa 55°C. Speziell im Winter ist die Außenlufttemperatur niedriger als die Brauchwassertemperatur, so dass im Rekuperator nochmals Wärme vom Abgas auf die Frischluft übertragen werden kann. Da die Abgase im ersten Wärmetauscher 2 bereits auf eine Temperatur deutlich unterhalb 100°C abgekühlt werden, besteht in keinem Fall eine Gefahr der Überhitzung im Rekuperator 3, wenn dieser keine Wärme mehr aufnehmen kann.

Erfindungsgemäß strömt im ersten Wärmetauscher 2 Heizungswasser und zur Brauchwassererhitzung wird in einem nicht dargestellten weiteren Wärmetauscher das im Rekuperator 3 vorgewärmte Brauchwasser von dem Heizungswasser auf Solltemperatur erhitzt.

## Patentansprüche

1. Heizgerät mit einem von einem Gebläse (7) unterstützen Heizungsbrenner (1) und einem von Heizungswasser durchströmten ersten Wärmetauscher (2) zum Abkühlen der Abgase des Heizungsbrenners (1), einer ersten Abgasleitung (4) zum Abführen der im ersten Wärmetauscher (2) abgekühlten Abgase des Heizungsbrenners (1) und einer Frischluftleitung (5) zum Zuführen von Verbrennungsluft zum Gebläse (7), einem Rekuperator (3) stromab des ersten Wärmetauschers (2), in dem im ersten Wärmetauscher (2) abgekühlte Abgase des Heizungsbrenners (1) mit mindestens einem Brauchwasserspeicher (6), welcher sich in einem von Abgas durchspülten Gehäuse (14) befindet, wärmeleitend verbunden sind, wobei der Rekuperator (3) von einer Unterdruckkammer (10) umschlossen ist wobei das Gehäuse (14) von der Unterdruckkammer (10) umgeben ist, wobei die Unterdruckkammer (10) mit der ersten Frischluftleitung (5) und einer zweiten Frischluftleitung (11) verbunden ist, wobei aus dem Gehäuse (14) eine zweite Abgasleitung (12) in die Umgebung führt, und diese zweite Abgasleitung (12) von der zweiten Frischluftleitung (11) umgeben ist, und wobei in einem weiteren, dritten Wärmetauscher das im Rekuperator (3) vorgewärmte Brauchwasser von dem Heizungswasser auf Solltemperatur erhitzt wird.

2. Heizgerät mit Rekuperator (3) nach Anspruch 1, wobei der Rekuperator (3) mit Unterdruckkammer (10) neben der Einheit aus Heizungsbrenner (1) und erstem Wärmetauscher (2) angeordnet ist.

3. Heizgerät mit Rekuperator (3) nach Anspruch 1, wobei der Rekuperator (3) mit Unterdruckkammer (10) oberhalb der Einheit aus Heizungsbrenner (1) und erstem Wärmetauscher (2) angeordnet ist.

## Claims

1. Heating device having a heating burner (1) assisted by a fan (7), and a first exchange (2), through which heating water flows, for cooling the flue gases of the heating burner (1), a first flue gas line (4) for discharging the flue gases of the heating burner (1), which have been cooled in the first heat exchanger (2), and a fresh air line (5) for supplying combustion air to the fan (7), a recuperator (3) downstream of the first heat exchanger (2), in which recuperator flue gases of the heating burner (1) which have been cooled in the first heat exchanger (2) are thermally conductively connected to at least one service water tank (6), wherein the recuperator (3) is enclosed by a reduced pressure chamber (10), wherein the reduced pressure chamber (10) is connected to the first fresh air line (5) and to a second fresh air line (11), wherein a second flue gas line (12) leads from the housing (14) into the surroundings, and this second flue gas line (12) is enclosed by the second fresh air line (11), and wherein the service water preheated in the recuperator (3) is heated to setpoint temperature by the heating water in a further third heat exchanger.

2. Heating device having a recuperator (3) according to Claim 1, wherein the recuperator (3) with the reduced pressure chamber (10) is arranged next to the unit consisting of the heating burner (1) and the first heat exchanger (2).

3. Heating device having a recuperator (3) according to Claim 1, wherein the recuperator (3) with the reduced pressure chamber (10) is arranged above the unit consisting of the heating burner (1) and the first heat exchanger (2).

## Revendications

1. Appareil de chauffage comportant un brûleur de chauffage (1) soutenu par une soufflante (7) et un premier échangeur de chaleur (2) parcouru par de l'eau de chauffage pour refroidir les gaz d'échappement du brûleur de chauffage (1), une première conduite de gaz d'échappement (4) pour évacuer les gaz d'échappement du brûleur de chauffage (1) refroidis dans le premier échangeur de chaleur (2) et une conduite d'air frais (5) pour acheminer de l'air de combustion à la soufflante (7), un récupérateur (3) en aval du premier échangeur de chaleur (2), dans lequel les gaz d'échappement du brûleur de chauffage (1) refroidis dans le premier échangeur de chaleur (2) sont raccordés à au moins un réservoir d'eau industrielle (6) en mode conducteur de chaleur, dans lequel le récupérateur (3) est entouré par une chambre à dépression (10), dans lequel la chambre à dépression (10) est reliée à la première conduite d'air frais (5) et à une seconde conduite d'air frais (11), dans lequel une seconde conduite de gaz d'échappement (12) mène de la soufflante (14) à l'environnement et cette seconde conduite de gaz d'échappement (12) est entourée par la seconde conduite d'air frais (11) et dans lequel, dans un troisième autre échangeur de chaleur, l'eau industrielle préchauffée dans le récupérateur (3) est chauffée à la température nominale par l'eau de chauffage.

2. Appareil de chauffage avec récupérateur (3) selon la revendication 1, dans lequel le récupérateur (3) est agencé avec la chambre à dépression (10) à côté de l'unité formée du brûleur de chauffage (1) et du premier échangeur de chaleur (2).

3. Appareil de chauffage avec récupérateur (3) selon la revendication 1, dans lequel le récupérateur (3) est agencé avec la chambre à dépression (10) au-dessus de l'unité formée du brûleur de chauffage (1) et du premier échangeur de chaleur (2).
